(19) Europäisches Patentamt
European Patent Office
Office européen des brevets

(11) **EP 2 666 697 B1**

(12) **FASCICULE DE BREVET EUROPEEN**

(45) Date de publication et mention
de la délivrance du brevet:
**21.08.2019 Bulletin 2019/34**

(51) Int Cl.:
***B61L 25/02*** *(2006.01)*   ***G01B 21/12*** *(2006.01)*
***G01C 22/00*** *(2006.01)*   ***G01C 21/16*** *(2006.01)*

(21) Numéro de dépôt: **13168736.0**

(22) Date de dépôt: **22.05.2013**

(54) **Procédé d'évaluation du diamètre d'une roue, et ensemble d'évaluation associé**

Verfahren zur Bestimmung des Durchmessers eines Rads, und entsprechendes Bestimmungsmittel

Method for evaluating the diameter of a wheel, and associated evaluation means

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.05.2012 FR 1254848**

(43) Date de publication de la demande:
**27.11.2013 Bulletin 2013/48**

(73) Titulaire: **ALSTOM Transport Technologies
93400 Saint-Ouen (FR)**

(72) Inventeur: **Le Bastard, Jean
78000 Versailles (FR)**

(74) Mandataire: **Lavoix
2, place d'Estienne d'Orves
75441 Paris Cedex 09 (FR)**

(56) Documents cités:
**EP-A1- 0 495 693      EP-A1- 1 197 419
JP-A- 2 293 667        US-A- 4 075 538
US-A1- 2004 181 320    US-A1- 2011 231 039**

**Description**

L'invention concerne en général les procédés d'évaluation du diamètre d'une roue d'un véhicule, notamment d'un véhicule ferroviaire.

Il est connu de mesurer le diamètre ou le périmètre externe des roues d'un train à l'arrêt (par exemple au dépôt). Une telle mesure est par la suite entrée manuellement dans le véhicule ferroviaire et est utilisée couramment pour calculer la vitesse et la distance parcourue par celui-ci à partir de la mesure de la rotation de la roue.

Par ailleurs, les systèmes de signalisation ferroviaires utilisent fréquemment une information de distance du train par rapport à des points particuliers de la voie et de vitesse maximale autorisée. Il est donc particulièrement important de connaître en permanence, avec une bonne précision et certitude, la position et la vitesse du train. Pour cela, il est nécessaire d'être certain de disposer en permanence d'une information précise et fiable sur le diamètre de roue, ce diamètre étant utilisé dans les calculs permettant d'évaluer la position et la vitesse du train.

Les documents JP 2 293667 A, US 2004/181320 A1 et EP 1 197 419 A1 décrivent des dispositifs et des méthodes de mesure d'un diamètre d'une roue.

Dans ce contexte, l'invention vise à proposer un procédé permettant d'évaluer une grandeur caractéristique du diamètre de la roue en permanence et avec une bonne précision sans intervention manuelle d'un opérateur (source potentielle d'erreur).

A cette fin, l'invention porte sur un procédé d'évaluation comprenant les étapes suivantes :

- acquérir une première grandeur représentative de la dérivée de l'accélération angulaire de la roue ;
- acquérir une seconde grandeur représentative de la dérivée de l'accélération du véhicule ;
- évaluer la grandeur caractérisant le diamètre de la roue à partir des première et deuxième grandeurs.

Certains capteurs utilisés pour mesurer l'accélération du véhicule, par exemple les capteurs inertiels, présentent en effet une erreur de mesure, qui est sensiblement constante sur des périodes courtes, de l'ordre de plusieurs minutes. La dérivée de la mesure d'un tel capteur n'est pas entachée d'erreurs du fait de la quasi constance de cette erreur. Le procédé permet donc une estimation automatique, permanente, fréquente, avec une bonne précision, de la grandeur caractérisant le diamètre de la roue.

La grandeur caractérisant le diamètre de la roue est typiquement le diamètre de la roue, ou son périmètre, ou le carré du diamètre, ou un coefficient correctif du diamètre ou du périmètre, ou toute autre valeur caractérisant le diamètre susceptible d'être utilisée par exemple dans un logiciel de calcul de la position et la vitesse du train ou du véhicule.

Le véhicule est typiquement un train, par exemple un train à grande vitesse ou un train inter cité ou un train régional, ou encore un train de banlieue ou un métro ou un tramway. En variante, le véhicule est tout autre type de véhicule dont le diamètre de roue est susceptible de varier.

Typiquement, la roue est métallique. En variante, la roue est d'un autre type.

Avantageusement, la première grandeur est évaluée avec un capteur en mesurant le déplacement angulaire de la roue.

Les trains sont équipés de tels capteurs, de telle sorte que la première grandeur peut être calculée à partir du signal fourni par ces capteurs.

Par exemple, ledit capteur comporte une roue dentée solidaire en rotation de la roue, et un détecteur prévu pour compter le nombre de dents passant devant ledit détecteur pendant une période de temps prédéterminée. La roue dentée est fixée directement à la roue ou est fixée sur un arbre solidaire de la roue. Le détecteur est un détecteur magnétique ou optique.

Les dents sont régulièrement espacées autour de la roue dentée. La première grandeur est déterminée par calcul, à partir du nombre de dents passant en regard du détecteur à chaque intervalle de temps. Cette première grandeur est par exemple la dérivée de l'accélération angulaire ou de l'accélération tangentielle de la roue.

La seconde grandeur est typiquement évaluée avec un capteur inertiel.

Ce type de capteur est également connu sous le nom d'accéléromètre. Ce type de capteur est particulièrement adapté pour évaluer l'accélération du véhicule et sa dérivée.

En variante, la dérivée de l'accélération du véhicule pourrait être calculée à partir d'informations acquises à l'aide d'un système GPS, ou de toute autre système adapté, tel qu'un radar à effet doppler ou un télémètre laser ou un lidar ou une caméra (calcul de distance par traitement d'image).

Typiquement, le capteur inertiel acquiert une première accélération du véhicule suivant une première direction parallèle au sens de déplacement normal du véhicule, la seconde grandeur étant évaluée à partir de ladite première accélération.

Dans une variante de réalisation, le procédé utilise seulement la première accélération. La dérivée de l'accélération du véhicule est calculée à partir des valeurs de première accélération acquises périodiquement par le capteur inertiel. Cette variante est particulièrement simple et robuste.

Toutefois, elle est entachée d'erreurs dans un petit nombre de cas :

- quand le gradient de la voie sur laquelle roule le véhicule varie ;
- quand la première accélération est mesurée suivant une première direction qui n'est pas exactement parallèle au sens de déplacement du véhicule ;

- dans les courbes, notamment quand la voie présente un dévers, c'est-à-dire est inclinée vers le centre de courbure ;
- dans le cas de l'utilisation d'un radar doppler, lorsqu'on franchit un pont métallique ou lorsque la vitesse est relativement faible ;
- dans le cas de l'utilisation d'un télémètre laser ou d'un lidar, lorsqu'il n'y a pas d'objet fixe le long de la voie ;
- dans le cas de l'utilisation d'une caméra, lors d'un changement de contraste, par exemple en entrée ou sortie d'un tunnel ;
- dans le cas de l'utilisation d'un GPS, lorsqu'on passe sous un pont ou dans un tunnel.

Avantageusement, le capteur inertiel acquiert une seconde vitesse de rotation du véhicule autour d'une seconde direction, la seconde direction étant sensiblement parallèle au plan de roulement du véhicule et perpendiculaire à la première direction, la seconde grandeur étant évaluée à partir de la première accélération et à partir de la seconde vitesse de rotation.

Ceci permet d'augmenter la précision du procédé dans les zones où le gradient de la voie n'est pas constant.

En effet, dans les zones où la voie n'est pas plate, et donc où elle présente un gradient (montée ou descente), la gravitation contribue à accélérer le véhicule suivant la première direction. En d'autres termes, la gravitation a une composante non nulle selon la première direction. Au moment où le gradient de la voie évolue, la contribution de la gravitation est modifiée, ce qui a une influence sur la dérivée de l'accélération mesurée du véhicule.

La modification du gradient de la voie est détectée à partir de l'information acquise par le capteur inertiel et correspondant à la seconde vitesse de rotation du véhicule.

Pour calculer la seconde grandeur, le procédé utilise donc la première accélération, mesurée suivant la première direction, corrigée de la contribution de la gravitation. Alternativement, l'étape d'évaluation de la grandeur caractérisant le diamètre de la roue n'est pas effectuée quand le capteur inertiel détecte une variation du gradient de voie.

Selon une autre variante de réalisation, le capteur inertiel acquiert des première deuxième et troisième vitesses de rotation du véhicule respectivement autour de la première direction, autour d'une deuxième direction sensiblement parallèle au plan de roulement du véhicule et perpendiculaire à la première direction, et autour d'une troisième direction sensiblement perpendiculaire au plan de roulement du véhicule, la seconde grandeur étant évaluée à partir de la première accélération et à partir des première, deuxième et troisième vitesses de rotation.

La prise en compte des première, deuxième et troisième vitesses de rotation permet d'augmenter la précision du procédé, en identifiant l'orientation du véhicule.

Notamment à l'entrée et à la sortie de la courbe, le dévers s'accentue ou diminue. Le comportement du véhicule est alors proche du comportement en cas de variation du gradient de voie. Le fait d'acquérir les première, deuxième et troisième vitesses de rotation permet de différencier, lors de l'étape d'évaluation de la grandeur caractérisant le diamètre de la roue, le cas de la courbe en dévers et le cas le la variation du gradient de voie. Alternativement, l'étape d'évaluation de la grandeur caractérisant le diamètre de la roue n'est pas effectuée quand le capteur inertiel détecte que le véhicule se trouve dans une courbe en dévers.

Selon encore une autre variante de réalisation, le capteur inertiel acquiert une seconde accélération du véhicule suivant une seconde direction sensiblement parallèle au plan de roulement du véhicule et perpendiculaire à la première direction, et/ou acquiert une troisième accélération suivant une troisième direction sensiblement perpendiculaire au plan de roulement du véhicule, la seconde grandeur étant évaluée à partir de la première accélération et à partir des seconde et/ou troisième accélérations.

Ceci permet d'augmenter la précision du procédé, notamment dans le cas où la première accélération est mesurée suivant une direction qui ne correspond pas exactement au sens de déplacement normal du véhicule. Ceci correspond au cas où le capteur inertiel est monté dans une orientation légèrement décalée par rapport à la direction de déplacement du train. Normalement, la première direction correspond exactement au sens de déplacement normal du véhicule. Toutefois, la première direction peut être décalée angulairement parallèlement au plan de roulement par rapport à la direction de déplacement du véhicule. Elle peut également présenter une flèche par rapport à cette direction de déplacement, c'est-à-dire être décalée vers le haut ou vers le bas par rapport à la direction de déplacement, c'est-à-dire ne pas être parallèle au plan de roulement.

Le fait d'acquérir l'accélération mesurée suivant la seconde direction permet d'évaluer le décalage du capteur inertiel dans le premier cas, c'est-à-dire dans le cas où la première direction est décalée par rapport à la direction de déplacement du véhicule seulement parallèlement au plan de roulement. Le fait d'acquérir la troisième accélération permet d'évaluer le décalage du capteur dans le second cas. Ces décalages peuvent alors être pris en compte pour le calcul de la seconde grandeur.

Il est à noter que ces décalages sont sensiblement constants. Ils n'ont pas besoin d'être évalués en permanence. Ils sont par exemple évalués périodiquement, lorsque le véhicule quitte un arrêt en suivant une ligne droite.

Selon un autre aspect de l'invention, le procédé comprend une étape de vérification de l'absence de patinage ou enrayage de la roue.

Le patinage et l'enrayage sont deux cas où la roue glisse sur la surface de roulement, par exemple sur le rail dans le cas d'un véhicule ferroviaire. Le glissement peut être accompagné d'un roulement ou non. En d'autres termes, ce sont deux cas où la vitesse linéaire de la roue est inférieure ou supérieure à la vitesse de déplacement du véhicule selon la première direction.

Au cas où on détecte un patinage ou un enrayage de la roue, le procédé ne calcule pas la grandeur caractérisant le diamètre de la roue. En effet, dans ce cas il n'y a pas proportionnalité entre la dérivée de l'accélération angulaire de la roue et la dérivée de l'accélération du véhicule.

L'information concernant l'absence ou la présence de patinage ou enrayage est acquise directement dans le calculateur de pilotage du véhicule, où elle est présente.

Avantageusement, le procédé comprend une étape de comparaison de la seconde grandeur avec une limite prédéterminée, de manière à empêcher l'évaluation de la grandeur caractérisant le diamètre de la roue à partir des première et deuxième grandeurs quand la seconde grandeur est inférieure à la limite prédéterminée.

En effet, au cours de cette évaluation, on effectue un rapport entre la première grandeur et la seconde grandeur, la seconde grandeur étant au dénominateur. Quand la seconde grandeur est très faible, voire nulle, le calcul est impossible ou la marge d'erreurs est extrêmement élevée.

En d'autres termes, le procédé est particulièrement précis dans les phases d'accélération et de décélération du véhicule, par exemple au démarrage, ou à l'approche d'un arrêt.

Avantageusement, le procédé comprend une étape de filtrage de la grandeur caractérisant le diamètre de la roue.

Selon un second aspect, l'invention vise un ensemble d'évaluations d'une grandeur caractérisant le diamètre d'une roue d'un véhicule, l'ensemble comprenant :

- un dispositif d'acquisition d'une première grandeur représentative de la dérivée de l'accélération angulaire de la roue ;
- un dispositif d'acquisition d'une seconde grandeur représentative de la dérivée de l'accélération du véhicule ;
- un dispositif d'évaluation de la grandeur caractérisant le diamètre de la roue à partir des première et seconde grandeurs.

D'autres caractéristiques et avantages de l'invention ressortiront de la description détaillée qui en est donnée ci-dessous, à titre indicatif et non nullement limitatif, en référence aux figures annexées, parmi lesquelles :

- la figure 1 est un diagramme d'étape illustrant de manière schématique les principales étapes du procédé ;

- la figure 2 est une représentation schématique simplifiée d'un véhicule équipé du dispositif de l'invention ;
- la figure 3 est une représentation schématique simplifiée d'un capteur prévu pour mesurer la vitesse de rotation des roues du véhicule ;
- la figure 4 est une représentation schématique simplifiée d'un véhicule se déplaçant sur une voie de gradient variable ; et
- la figure 5 est une représentation schématique illustrant le décalage en orientation entre la première accélération et la direction de déplacement du véhicule.

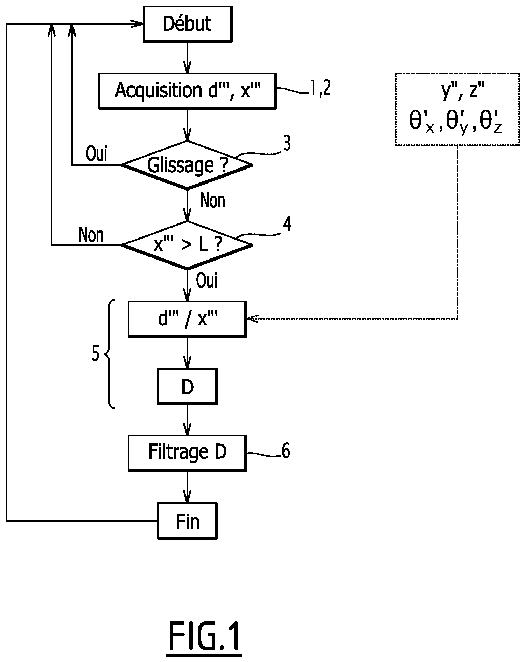

Le procédé illustré sur la figure 1 vise à calculer le diamètre d'une roue d'un véhicule, et plus particulièrement d'un véhicule ferroviaire équipé de roues métalliques.

Le diamètre des roues d'un tel véhicule évolue essentiellement, sous l'effet du ré-usinage des roues effectué périodiquement au dépôt, et aux modifications du profil de la roue résultant par exemple d'un blocage de la roue au cours du freinage.

Le train comporte typiquement un grand nombre de roues, par exemple quatre ou huit roues par voiture. Le procédé est appliqué à chaque roue du train. En variante, le procédé est appliqué à certaines roues du train seulement, par exemple une roue par voiture, ou à une seule roue. On acquiert typiquement pour chaque roue concernée une première grandeur représentative de la dérivée de l'accélération angulaire de la roue. En revanche, on utilise la même seconde grandeur, représentative de la dérivée de l'accélération du véhicule, pour chacune des roues du train.

Le diamètre de la roue évalué par le procédé de l'invention correspond à un diamètre moyen, pris en considérant une fraction du périmètre de la roue, voire même la totalité du périmètre de la roue.

Le procédé met en oeuvre en permanence les étapes illustrées sur la figure 1.

Dans la description qui va suivre, $\alpha'$, $\alpha''$ et $\alpha'''$ symbolisent respectivement la vitesse angulaire, et ses dérivées première et seconde. $x'$, $x''$ et $x'''$ symbolisent respectivement la vitesse linéaire du véhicule selon l'axe x, et ses dérivées première et seconde.

Le procédé comporte les étapes suivantes :

1) vérification de l'absence de patinage ou d'enrayage de la roue ;

2) acquisition d'une première grandeur représentative de la dérivée de l'accélération angulaire de la roue $\alpha'''$ ;

3) acquisition d'une seconde grandeur représentative de la dérivée de l'accélération du véhicule $x'''$;

4) vérification que la seconde grandeur est supérieure à une limite prédéterminée ;

5) évaluation de la grandeur caractérisant le diamètre de la roue à partir des première et seconde grandeurs ;

6) filtrage de la grandeur caractérisant le diamètre de la roue.

Les étapes 1) et 2) sont déclenchées de manière simultanée, ou quasi simultanée.

Pour l'acquisition de la première grandeur, on utilise un capteur mesurant le déplacement angulaire de la roue par unité de temps. Pour l'acquisition de la seconde grandeur, on utilise typiquement un capteur inertiel embarqué à bord du véhicule.

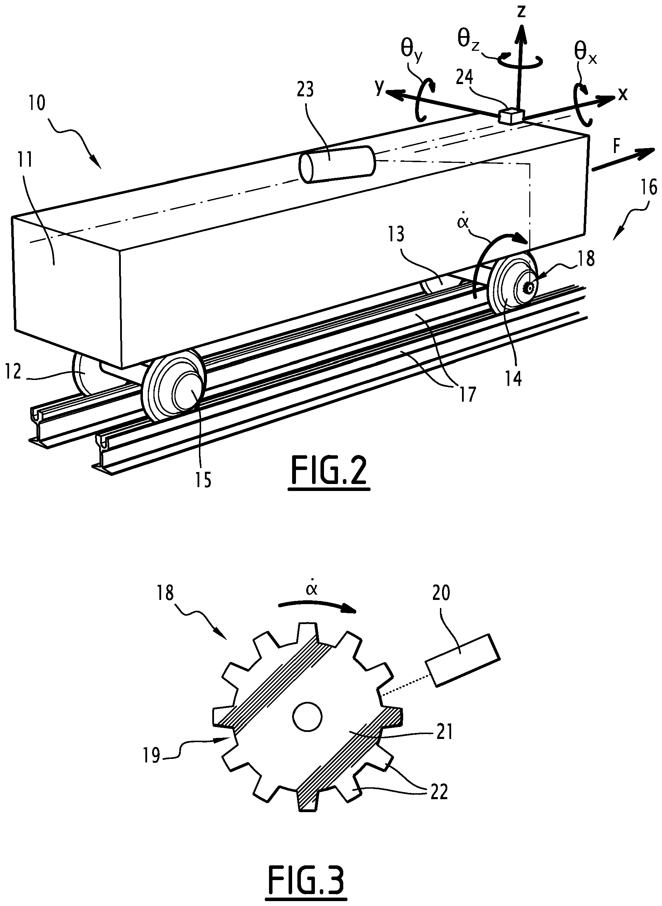

La figure 2 illustre le véhicule 10, ce véhicule étant une voiture ou locomotive de train représentée de manière très schématique. Ce véhicule comporte une caisse 11 supportée par quatre roues 12, 13, 14, 15. La voie 16 sur laquelle circule le véhicule comporte deux rails 17 sur lesquels roulent les roues 12, 13, 14 et 15. Le procédé est prévu pour évaluer le diamètre de la roue 14.

Le capteur 18 utilisé pour mesurer le déplacement angulaire de la roue par unité de temps est illustré sur la figure 3. Ce capteur comporte une roue dentée 19 solidaire en rotation de la roue 14 et un détecteur 20. La roue dentée 19 comporte un moyeu 21 et une pluralité de dents 22 faisant saillie radialement par rapport au moyeu 21. Le détecteur 20 est solidaire de la caisse, et est disposé à proximité de la roue dentée 19. Le capteur 18 est prévu pour indiquer chaque fois qu'une dent 22 passe en face du détecteur 20.

La première grandeur, représentative de la dérivée de l'accélération angulaire de la roue $\alpha'''$, est la dérivée de l'accélération tangentielle de la roue $d'''$.

La vitesse tangentielle $d'$ de la roue à l'instant Ti peut notamment être calculée à l'aide de la formule suivante :

$$d' = n_i/N \times D\pi / \Delta t$$

où $\Delta t$ est la période de mesure, N est le nombre total de dents de la roue dentée 19, $n_i$ est le nombre de dents détectées par le détecteur 20 à l'instant Ti pendant la période $\Delta t$, et D le diamètre théorique de la roue L'accélération tangentielle $d''$ peut être calculée en utilisant la formule suivante :

$$d'' = (n_i - n_{i-1})/N \times D\pi / \Delta t^2$$

où $n_{i-1}$ est le nombre de dents détectées à Ti-1, c'est-à-dire lors de l'échantillonnage précédent.

La dérivée de l'accélération tangentielle est par exemple calculée à l'aide de la formule suivante :

$$d''' = (n_i - 2 \times n_{i-1} + n_{i-2})/N \times D\pi / \Delta t^3.$$

où $n_i - 2$ est le nombre de dents détectées à l'instant Ti - 2.

En pratique, le capteur 18 renseigne un calculateur 23 embarqué à bord du véhicule, celui-ci effectuant les calculs permettant de déterminer la dérivée de l'accélération tangentielle de la roue $d'''$.

Le capteur inertiel 24 est embarqué à bord du véhicule. Dans un premier mode de réalisation de l'invention, le capteur inertiel 24 est monté de manière à mesurer l'accélération $x''$ du véhicule selon une première direction parallèle au sens de déplacement normal du véhicule. La première direction, correspondant au sens de déplacement normal du véhicule vers l'avant, est représentée par la flèche x sur la figure 2. Sur cette figure, la direction y correspond à la direction transversale, les directions x et y définissant un plan parallèle au plan de roulement du véhicule. La direction z est perpendiculaire au plan de roulement.

Dans le premier mode de réalisation, on suppose que la première direction x est parfaitement parallèle avec la direction de déplacement F du véhicule, et on néglige l'erreur pouvant résulter d'un mauvais montage du capteur 24, et en particulier d'un mauvais alignement de cette première direction x par rapport à la direction de déplacement F du véhicule.

La dérivée de l'accélération du véhicule est calculée de la manière suivante :

$$x''' = (x''_i - x''_{i-1}) / \Delta t$$

où $\Delta t$ est la période d'échantillonnage, $x''_i$ est l'accélération mesurée par le capteur 24 à l'instant Ti, et $x''_{i-1}$ est l'accélération mesurée par le capteur 24 à l'instant Ti-1 précédant immédiatement l'instant Ti.

En pratique, les valeurs mesurées par le capteur 24 sont transmises au calculateur 23, celui-ci calculant la dérivée de l'accélération.

A l'étape 3, la vérification qu'il n'y a ni glissement ni enrayage est effectuée en interrogeant le calculateur qui pilote le véhicule, qui peut être le calculateur 23. Cette information est présente dans le calculateur car elle est généralement utilisée dans d'autres algorithmes programmés dans le calculateur.

A l'étape 4, le calculateur compare la dérivée de l'accélération du véhicule $x'''$ acquise à l'étape 2 avec une limite prédéterminée L. En effet, si cette dérivée est trop faible, alors les étapes de calcul suivantes ne peuvent pas être effectuées avec une bonne précision.

Si $x'''$ est inférieur à la limite, les étapes suivantes ne sont pas effectuées.

A l'étape 5, le capteur effectue le rapport entre $d'''$ et $x'''$ et en déduit le diamètre corrigé Dréel de la roue. Il utilise pour cela l'équation suivante :

$$\lambda = d''' / x'''$$

$$Dréel = D / \lambda$$

où D est le diamètre de roue théorique utilisé pour évaluer d'''.

Cette mesure de Dréel est affectée d'une certaine erreur due aux bruits des mesures. L'étape 6 permet de filtrer cette valeur sur le long terme afin d'obtenir une valeur plus précise (le diamètre de la roue ne variant pas sur le long terme). Ce filtrage est par exemple réalisé en effectuant une moyenne glissante de la valeur de Dréel obtenue à l'étape 5.

En variante, le filtrage pourrait être réalisé au moyen d'un filtre de Kalman.

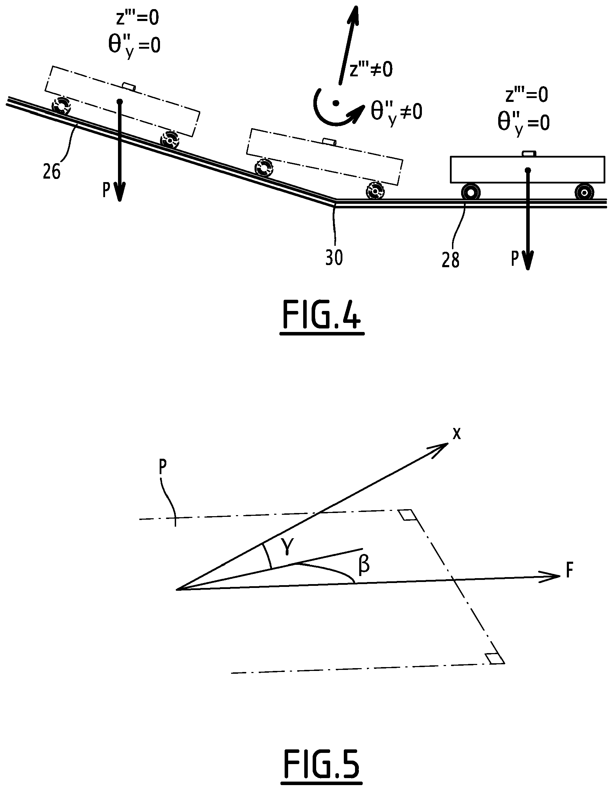

Un second mode de réalisation de l'invention va maintenant être décrit, en référence à la figure 4.

Seuls les points par lesquels le second mode de réalisation diffère du premier seront détaillés ci-dessous. Les éléments identiques ou assurant les mêmes fonctions dans les deux modes de réalisation seront désignés par les mêmes références.

Dans le second mode de réalisation, le capteur inertiel 24 acquiert non seulement l'accélération du véhicule suivant la première direction (première accélération x"), mais acquiert également au même instant la vitesse angulaire du véhicule autour de la seconde direction y (seconde vitesse angulaire θy').

Cette valeur est prise en compte à l'étape 5 pour la détermination du diamètre de roue. Ceci permet d'augmenter la précision du calcul dans les portions de voie où se produit une rupture de pente, c'est-à-dire une variation dans le gradient de la pente, comme illustré sur la figure 4.

Sur cette figure, on a représenté un profil de voie comportant un premier tronçon descendant 26, un second tronçon plat 28, une rupture de pente 30 intervenant entre les tronçons 26 et 28. Quand le véhicule 10 se déplace sur la portion 26, le poids P du véhicule a une composante qui tend à accélérer le véhicule suivant la direction x. Le capteur inertiel 24, quand il acquiert la valeur d'accélération x" suivant la première direction, mesure une valeur totale d'accélération qui prend en compte la contribution de la gravitation. Tant que la pente est constante, la contribution de la gravitation à l'accélération est constante elle aussi, et la dérivée x''' n'est pas affectée par le fait que le véhicule se trouve sur un tronçon de voie en pente. Ceci est vrai également pour la portion horizontale 28. En revanche, au point 30, il y a rupture de pente, et la contribution de la gravitation à l'accélération suivant la première direction change. Ceci se traduit par le fait que la contribution de la gravitation à la valeur x''' devient non nulle.

Une telle rupture de pente peut être détectée par l'accéléromètre 24, car au point 30 θy' varie. Le calculateur peut alors prendre en compte pour l'estimation de la seconde grandeur non seulement x''', mais également θy'. Plus précisément, il corrige la valeur x''' en fonction de θy'. Par exemple, il ajoute à x''' la contribution de la gravitation, qui vaut θy' g cosθy, où g est l'accélération de la pesanteur.

En variante, le calculateur n'effectue pas l'étape 5 quand il détecte que la variation de θy' est supérieure à une valeur prédéterminée.

Un troisième mode de réalisation va maintenant être détaillé. Seuls les points par lesquels le troisième mode de réalisation diffère du premier seront détaillés ci-dessous. Les éléments identiques ou assurant les mêmes fonctions dans les deux modes de réalisation seront désignés par les mêmes références.

Dans ce troisième mode de réalisation, le capteur inertiel 24 acquiert non seulement l'accélération du véhicule suivant la première direction x", mais également la vitesse angulaire du véhicule autour de la première direction x , de la deuxième direction y et autour de la troisième direction z, ces vitesses angulaires étant notées respectivement θx', θy' et θz'.

Ces valeurs sont ensuite prises en compte pour déterminer la seconde grandeur, représentative de la dérivée de l'accélération du véhicule.

Ceci est particulièrement utile quand le procédé est appliqué alors que le véhicule suit une portion de voie en courbe et en dévers.

En variante, le calculateur n'effectue pas l'étape 5 quand il détecte que les variations de θx' ou θz' sont supérieures à une valeur prédéterminée.

Un quatrième mode de réalisation de l'invention va maintenant être détaillé, en référence à la figure 5.

Seuls les points par lesquels le quatrième mode de réalisation diffère du premier seront détaillés ci-dessous. Les éléments identiques ou assurant la même fonction seront désignés par les mêmes références.

Comme illustré sur la figure 5, le capteur 24 n'est généralement pas installé avec la première direction x rigoureusement parallèle à la direction de déplacement normale du véhicule F. L'orientation de la première direction x est décalée par rapport à F. Ce décalage peut se décomposer en deux décalages angulaires β et γ :

-    un décalage angulaire β parallèlement au plan de roulement P,
-    un décalage angulaire γ vers le haut ou vers le bas par rapport au plan de roulement P, encore appelé flèche.

Il est à noter qu'un ou deux des deux décalages angulaires peut ne pas être nul.

Dans ce cas, l'accélération x" mesurée suivant la première direction par le capteur inertiel 24 n'est pas rigoureusement égale à l'accélération du véhicule suivant la direction F.

Dans le quatrième mode de réalisation, on mesure périodiquement à l'aide du capteur inertiel 24 les valeurs de y" et z", en plus de x". Ces valeurs sont utilisées pour estimer les décalages angulaires β et γ.

Le calcul du paramètre λ est modifié de la manière suivante :

$$\lambda = d''' \cos \beta \cos \gamma / x'''$$

Les autres calculs sont identiques.

## Revendications

1. Procédé d'évaluation d'une grandeur caractérisant le diamètre d'une roue (14) d'un véhicule (10) lorsque celui-ci est en mouvement, le procédé comprenant les étapes suivantes :

   - acquérir une première grandeur représentative de la dérivée de l'accélération angulaire ($\alpha'''$) de la roue (14) ;
   - acquérir une seconde grandeur représentative de la dérivée de l'accélération du véhicule (10);
   - évaluer la grandeur caractérisant le diamètre de la roue (14) à partir des première et deuxième grandeurs.

2. Procédé selon la revendication 1, **caractérisé en ce que** la première grandeur est évaluée avec un capteur (18) en mesurant le déplacement angulaire de la roue (14).

3. Procédé selon la revendication 1 ou 2, **caractérisé en ce que** la seconde grandeur est évaluée avec un capteur inertiel (24).

4. Procédé selon la revendication 3, **caractérisé en ce que** le capteur inertiel (24) acquiert une première accélération (x'') du véhicule suivant une première direction (x) parallèle au sens de déplacement normal (F) du véhicule (10), la seconde grandeur étant évaluée à partir de ladite première accélération (x'').

5. Procédé selon la revendication 4, **caractérisé en ce que** le capteur inertiel (24) acquiert une seconde vitesse de rotation (θy') du véhicule (10) autour d'une seconde direction (y), sensiblement parallèle au plan de roulement (P) du véhicule (10) et perpendiculaire à la première direction (x), la seconde grandeur étant évaluée à partir de la première accélération (x'') et à partir de la seconde vitesse de rotation (θy').

6. Procédé selon la revendication 5, **caractérisé en ce que** le capteur inertiel (24) acquiert des première et troisième vitesses de rotation (θx', θy') du véhicule (10) autour respectivement de la première direction (x) et autour d'une troisième direction (z) sensiblement perpendiculaire au plan de roulement (P) du véhicule (10), la seconde grandeur étant évaluée à partir de la première accélération (x'') et à partir des première, deuxième et troisième vitesses de rotation (θ'x, θ'y, θ'z).

7. Procédé selon l'une quelconque des revendications 4 à 6, **caractérisé en ce que** le capteur inertiel (24) acquiert une seconde accélération (y'') du véhicule (10) suivant une seconde direction (y) sensiblement parallèle au plan de roulement (P) du véhicule (10) et perpendiculaire à la première direction (x), et/ou acquiert une troisième accélération (z'') suivant une troisième (z) direction sensiblement perpendiculaire au plan de roulement (P) du véhicule (10), la seconde grandeur étant évaluée à partir de la première accélération (x'') et à partir des seconde et/ou troisième accélérations (y'', z'').

8. Procédé selon l'une quelconque des revendications précédentes, **caractérisé en ce qu'**il comprend une étape de vérification de l'absence de patinage ou enrayage de la roue (14).

9. Procédé selon l'une quelconque des revendications précédentes, **caractérisé en ce qu'**il comprend une étape (4) de comparaison de la seconde grandeur avec une limite prédéterminée (L), de manière à empêcher l'évaluation de la grandeur caractérisant le diamètre de la roue (14) à partir des première et deuxième grandeurs quand la seconde grandeur est inférieure à la limite prédéterminée (L).

10. Procédé selon l'une quelconque des revendications précédentes, **caractérisé en ce qu'**il comprend une étape (6) de filtrage de la grandeur caractérisant le diamètre de la roue (14).

11. Ensemble d'évaluation d'une grandeur caractérisant le diamètre d'une roue (14) d'un véhicule (10), l'ensemble comprenant:

    - un dispositif d'acquisition d'une première grandeur représentative de la dérivée de l'accélération angulaire ($\alpha'''$) de la roue (10);
    - un dispositif d'acquisition d'une seconde grandeur représentative de la dérivée de l'accélération de véhicule (10);
    - un dispositif d'évaluation de la grandeur caractérisant le diamètre de la roue (14) à partir des première et deuxième grandeurs.

## Patentansprüche

1. Verfahren zum Auswerten einer den Durchmesser eines Rades (14) eines Fahrzeugs (10) in Bewegung charakterisierenden Größe, wobei das Verfahren die folgenden Schritte umfasst:

- Beschaffen einer ersten Größe, die für die Ableitung der Winkelbeschleunigung ($\alpha'''$) des Rades (14) repräsentativ ist;
- Beschaffen einer zweiten Größe, die für die Ableitung der Beschleunigung des Fahrzeugs (10) repräsentativ ist;
- Auswerten der den Durchmesser des Rades (14) charakterisierenden Größe aus der ersten und zweiten Größe.

2. Verfahren nach Anspruch 1, **dadurch gekennzeichnet, dass** die erste Größe mit einem Sensor (18) ausgewertet wird, indem die Winkelbewegung des Rades (14) gemessen wird.

3. Verfahren nach Anspruch 1 oder 2, **dadurch gekennzeichnet, dass** die zweite Größe mit einem Trägheitssensor (24) ausgewertet wird.

4. Verfahren nach Anspruch 3, **dadurch gekennzeichnet, dass** der Trägheitssensor (24) eine erste Beschleunigung (x") des Fahrzeugs gemäß einer ersten Richtung (x) parallel zur Richtung der normalen Bewegung (F) des Fahrzeugs (10) beschafft, wobei die zweite Größe aus der ersten Beschleunigung (x") ausgewertet wird.

5. Verfahren nach Anspruch 4, **dadurch gekennzeichnet, dass** der Trägheitssensor (24) eine zweite Drehgeschwindigkeit ($\theta y'$) des Fahrzeugs (10) um eine zweite Richtung (y) herum beschafft, die im Wesentlichen parallel zur Laufebene (P) des Fahrzeugs (10) und senkrecht zu der ersten Richtung (x) ist, wobei die zweite Größe aus der ersten Beschleunigung (x") und aus der zweiten Drehgeschwindigkeit ($\theta y'$) ausgewertet wird.

6. Verfahren nach Anspruch 5, **dadurch gekennzeichnet, dass** der Trägheitssensor (24) eine erste und dritte Drehgeschwindigkeit ($\theta x'$, $\theta y'$) des Fahrzeugs (10) jeweils um die erste Richtung (x) und um die dritte Richtung (z), im Wesentlichen senkrecht zur Laufebene (P) des Fahrzeugs (10), herum beschafft, wobei die zweite Größe aus der ersten Beschleunigung (x") und aus der ersten, zweiten und dritten Drehgeschwindigkeit ($\theta'x$, $\theta'y$, $\theta'z$) ausgewertet wird.

7. Verfahren nach einem beliebigen der Ansprüche 4 bis 6, **dadurch gekennzeichnet, dass** der Trägheitssensor (24) eine zweite Beschleunigung (y") des Fahrzeugs (10) gemäß einer zweiten Richtung (y) im Wesentlichen parallel zur Laufebene (P) des Fahrzeugs (10) und senkrecht zur ersten Richtung (x) beschafft und/oder eine dritte Beschleunigung (z") gemäß einer dritten (z) Richtung im Wesentlichen senkrecht zur Laufebene (P) des Fahrzeugs beschafft, wobei die zweite Größe aus der ersten Beschleunigung (x") und aus der zweiten und/oder dritten Beschleunigung (y", z") ausgewertet wird.

8. Verfahren nach einem beliebigen der vorhergehenden Ansprüche, **dadurch gekennzeichnet, dass** es einen Schritt der Überprüfung des Ausbleibens eines Schlupfes oder Blockierens des Rades (14) aufweist.

9. Verfahren nach einem beliebigen der vorhergehenden Ansprüche, **dadurch gekennzeichnet, dass** es einen Schritt (4) des Vergleichens der zweiten Größe mit einer vorgegebenen Grenze (L) aufweist, derart dass die Auswertung der den Durchmesser des Rades (14) charakterisierenden Größe aus der ersten und zweiten Größe verhindert wird, wenn die zweite Größe kleiner als eine vorbestimmte Grenze (L) ist.

10. Verfahren nach einem beliebigen der vorhergehenden Ansprüche, **dadurch gekennzeichnet, dass** es einen Schritt (6) des Filterns der den Durchmesser des Rades (14) charakterisierenden Größe aufweist.

11. Anordnung zum Auswerten einer den Durchmesser eines Rades (14) eines Fahrzeugs (10) charakterisierenden Größe, wobei die Anordnung umfasst:

    - eine Vorrichtung zum Beschaffen einer ersten Größe, die für die Ableitung der Winkelbeschleunigung ($\alpha'''$) des Rades (10) repräsentativ ist;
    - eine Vorrichtung zum Beschaffen einer zweiten Größe, die für die Ableitung der Beschleunigung des Fahrzeugs (10) repräsentativ ist;
    - eine Vorrichtung zum Auswerten der den Durchmesser des Rades (14) charakterisierenden Größe aus der ersten und zweiten Größe.

**Claims**

1. Method for evaluating a value characterizing the diameter of a wheel (14) of a vehicle (10) when the latter is in movement, method comprising the following steps :

    - acquisition of a first value representing the derivative of the angular acceleration ($\alpha'''$) of the wheel (14) ;
    - acquisition of a second value representing the derivative of the acceleration of the vehicle (10) ;
    - evaluation of the value characterizing the diameter of the wheel (14) based on the first and second values.

2. Method according to claim 1, **characterized in that** the first value is evaluated with a sensor (18) by measuring the angular movement of the wheel (14).

**3.** Method according to claim 1 or 2, **characterized in that** the second value is measured with an inertial sensor (24).

**4.** Method according to claim 3, **characterized in that** the inertial sensor (24) acquires a primary acceleration (x") of the vehicle along a primary direction (x) parallel to the normal direction of movement (F) of the vehicle (10), the second value being evaluated from the said primary acceleration (x").

**5.** Method according to claim 4, **characterized in that** the inertial sensor (24) acquires a secondary speed of rotation (θy') of the vehicle (10) around a secondary direction (y) which is substantially parallel to the plane of movement (P) of the vehicle (10) and perpendicular to the primary direction (x), the second value being evaluated from the primary acceleration (x") and from the secondary speed of rotation (θy').

**6.** Method according to claim 5, **characterized in that** the inertial sensor (24) acquires the primary and tertiary speeds of rotation (θx', θy') of the vehicle (10) respectively around the primary direction (x) and around a tertiary direction (z) substantially perpendicular to the plane of movement (XP) of the vehicle (10), the second value being evaluated from the primary acceleration (x") and from the primary, secondary and tertiary speeds of rotation (θ'x, θ'y, θ'z).

**7.** Method according to any one of claims 4 to 6, **characterized in that** the inertial sensor (24) acquires a secondary acceleration (y") of the vehicle (10) along a secondary direction (y) substantially parallel to the plane of movement (P) of the vehicle (10) and perpendicular to the primary direction (x), and / or acquires a tertiary acceleration (z") along a tertiary direction (z) substantially perpendicular to the plane of movement (P) of the vehicle (10), the second value being evaluated from the primary acceleration (x") and from the secondary and / or tertiary accelerations (y", z").

**8.** Method according to any one of the preceding claims, **characterized in that** it comprises a step of verifying the absence of slippage or jamming of the wheel (14).

**9.** Method according to any one of the preceding claims, **characterized in that** it includes a step (4) of comparing the second value with a predetermined limit (L), so as to prevent the evaluation of the value characterizing the diameter of the wheel (14) from the first and second values when the second value is lower than the predetermined limit (L).

**10.** Method according to any one of the preceding claims, **characterized in that** it includes a step (6) for filtering the characteristic value of the diameter of the wheel (14).

**11.** Assembly for evaluation of a value characterizing the diameter of the wheel (14) of a vehicle (10), the assembly comprising:

- a device for the acquisition of a first value representing the derivative of the angular acceleration (α''') of the wheel (10);
- a device for the acquisition of a second value representing the derivation of the acceleration of the vehicle (10);
- a device for the evaluation of the value characterizing the diameter of the wheel (14) based on the first and second values.

FIG.1

## FIG.2

## FIG.3

$z''' = 0$
$\theta''_y = 0$

$z''' \neq 0$

$\theta''_y \neq 0$

$z''' = 0$
$\theta''_y = 0$

26

P

30

28

P

## FIG.4

P

x

γ

β

F

## FIG.5

**EP 2 666 697 B1**

## RÉFÉRENCES CITÉES DANS LA DESCRIPTION

**Documents brevets cités dans la description**

- JP 2293667 A
- US 2004181320 A1
- EP 1197419 A1